(19) Europäisches Patentamt
European Patent Office
Office européen des brevets

(11) EP 0 628 151 B1

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(21) Anmeldenummer: **92905397.3**

(22) Anmeldetag: **26.02.1992**

(51) Int Cl.[6]: **F27B 9/24**, F27D 3/02, F16C 13/00

(86) Internationale Anmeldenummer:
**PCT/DE92/00146**

(87) Internationale Veröffentlichungsnummer:
**WO 93/17288 (02.09.1993 Gazette 1993/21)**

(54) **ANORDNUNG VON ROLLEN IN ROLLENÖFEN**

ROLLER-TYPE FURNACE

DISPOSITION DE ROULEAUX DANS DES FOURS A ROULEAUX

(84) Benannte Vertragsstaaten:
**DE ES FR GB IT**

(43) Veröffentlichungstag der Anmeldung:
**14.12.1994 Patentblatt 1994/50**

(73) Patentinhaber: **HERRMANN, Georg**
**D-72076 Tübingen (DE)**

(72) Erfinder: **HERRMANN, Georg**
**D-72076 Tübingen (DE)**

(56) Entgegenhaltungen:
**EP-A- 0 393 292**
**DE-A- 1 610 886**
**GB-A- 2 061 459**
**US-A- 4 043 786**

EP 0 628 151 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf Rollenöfen, die es erlauben, Gegenstände im kontinuierlichen Betrieb einer Wärmebehandlung zu unterziehen, etwa Metalle zu härten oder Glas, Porzellan, Keramik, Fliesen, Ziegeln o.ä. zu brennen. Dabei kommen bei niedrigen Temperaturen meistens Stahlrollen zum Einsatz, bei höheren dagegen Keramikrollen. Und doch werden bei den heute üblichen Anwendungstemperaturen in vielen Fällen die Festigkeitsgrenzen der eingesetzten Rollen erreicht oder überschritten. Dadurch kommt es zu vorzeitigem Ersatzbedarf und hohen Kosten, oder es kann eine gewünschte Anwendung überhaupt nicht vorgenommen werden.

Nun ist bereits bekannt, daß man das Verhalten von Rollen dadurch beeinflussen kann, daß man ihnen durch äußeren Eingriff einen bestimmten Verlauf entlang ihrer Längsachse aufprägt, also senkrecht zur Achse des Rollenofens. So wird in US-A 4 043 786 vorgeschlagen, die Rolle auf der antriebsfreien Seite des Rollenofens zu verlängern und das verlängerte Ende durch ein zusätzliches Traggehäuse zu führen, das gegenüber der Ebene, die aus den beiden bereits vorher bekannten Traggehäusen gebildet wird, nach oben versetzt ist. Dadurch wird die Rolle konkav durchgebogen, sodaß breite Glasscheiben nicht mehr in ihrem mittigen Bereich auf der Rolle aufliegen, (was die Güte ihrer Oberfläche beeinträchtigen würde), sondern nur noch an den Rändern, die anschließend leicht abgeschnitten werden können.

Einmal abgesehen davon, daß durch die erforderliche starke Ausprägung der konkaven Rollenform die Einsetzbarkeit der Rollen bei höheren Temperaturen reduziert wird, zieht die genannte Lösung zwei Nachteile nach sich :

a. Bei vorgegebener Rollenlänge kann nur ein kürzerer Rollenabschnitt als vorher im Ofeninneren genutzt werden. Das bedeutet, daß die Warmzone des Rollenofens schmaler werden muß, wodurch weniger Brenngut aufgenommen werden kann als vorher. Der spezifische Investitionsbedarf und Energieverbrauch pro Brenngut erhöht sich dementsprechend.

b. Auch der absolute Investitionsbedarf erhöht sich. Sofern keine verlängerten Rollen zur Verfügung stehen, müssen sogar neue Rollenöfen gebaut werden. Aber selbst wenn hinreichend längere Rollen zur Verfügung stehen, ist der zusätzliche Installationsbedarf am Ofen hoch. Nicht nur, daß der Ofen breiter und deshalb teurer wird, es muß auch dafür Sorge getragen sein, daß das zusätzliche Traggehäuse definiert höhenverstellbar ist. Zusätzlich muß die dazu erforderliche Konstruktion besonders stabil ausgelegt werden, weil am Rollenende durch die stark konkave Rollenform hohe, nach unten gerichtete Kräfte auftreten, die von dem zusätzlichen Traggehäuse dimensionsstabil aufgefangen werden müssen.

Auch in EP 0 393 292 werden die Rollenenden durch spezielle Vorrichtungen mechanisch von außen umfaßt. Allerdings sind diese Einspannvorrichtungen nicht nur höhenverstellbar, sondern erlauben zusätzlich auch eine Winkelausrichtung. Dadurch kann einerseits zwischen linkem und rechtem Rollenende ein beliebiger Höhenversatz eingestellt, andererseits können linkes und rechtes Rollenende beliebig in Winkel angestellt werden - je nach Bedarf. Da die gemäß EP 0 393 292 angestrebten Winkelanstellungen der Rollenenden eine stark konkave Durchwölbung der Rollen bewußt vermeiden sollen, brauchen die oben erwähnten Einspannvorrichtungen nur deutlich geringere Kräfte aufzunehmen, sie dürfen daher deutlich weniger stabil ausgelegt sein. Dennoch verbleiben die folgenden Nachteile :

1. Eine Nachrüstung an bestehenden öfen ist kaum realisierbar.
2. Die Anforderungen an die Präzision der Einstellbarkeit bzgl. Höhe und Winkel dieser Einspannvorrichtungen sind hoch; zu ihrer Erfüllung muß erheblicher technischer Aufwand getrieben werden.
3. Die optimale Einstellung der Vorrichtung sowie deren Überwachung erfordert gründlich geschultes Personal.
4. Die Kosten für die erforderlichen Vorrichtungen an den Rollenöfen sind hoch.
5. Schließlich müssen die Einspannvorrichtungen die Rollenenden über ein gewisse Mindestlänge aufnehmen, um eine hinreichend genaue Winkeleinstellung zu ermöglichen. Bei vorgegebener Rollenlänge wird daher die effektiv nutzbare Rollenlänge reduziert, womit sich wieder die oben unter a. genannten Nachteile ergeben, wenn auch in abgeschwächter Form.

Die Aufgabe der vorliegenden Erfindung besteht daher darin, die Anwendungsgrenzen der heutigen Rollenöfen, sofern diese durch die Belastbarkeit der in ihnen verwendeten Rollen bestimmt sind, mit möglichst einfachen, kostengünstigen und im Alltag einfach zu handhabenden Mitteln auszudehnen und dabei die oben genannten Nachteile des heute bekannten Standes der Technik zu vermeiden.

Diese Aufgabe wird erfindungsgemäß durch die Merkmale im kennzeichnenden Teil des Anspruchs 1 gelöst. Vorteilhafte Ausgestaltungen dieser Aufgabenlösung ergeben sich aus den Unteransprüchen.

Demnach sieht die Erfindung vor, an den Rollenenden Gewichte, die sich mit den Rollen mitdrehen können, zu befestigen und dadurch Biegemomente auf die Rollenenden auszuüben dergestalt, daß das resultierende Biegemoment um das Rollenlager auf der Außenseite desselben angreift. Eine bevorzugte, weil in der Praxis besonders einfach

realisierbare Art der Befestigung dieser Gewichte geht dabei von dem Umstand aus, daß die in der Praxis eingesetzten Ofenrollen i.a. nicht massiv, sondern hohl sind. Daher liegt es nahe, als Gewicht einen vorzugsweise rotationssymmetrischen Stab geeigneter Dimensionierung (s.u.) vorvorzusehen und diesen in das Rollenende zu stecken.

Zum besseren Verständnis der erfindungsgemäßen Lösung zeigt Figur 1 ein bevorzugtes Lösungsbeispiel.

Eines der beiden Enden der Hohlrolle (4) ragt von links in Figur 1 hinein und liegt auf dem Rollenlager (16) auf. In dieses Rollenende ist der rotationssymmetrische Stab (1) mit dem Schaft, also dem kürzeren Ende $b_k$ (2), gesteckt, während das längere Ende $b_l$ (3) aus der Rolle (4) herausragt. Zusätzlich wird das Stabende mechanisch fest mit der Rolle (4) verbunden, was z.B. mit Hilfe eines Zapfens (5) erfolgen kann, wie in Figur 1 beispielhaft dargestellt. Dadurch kann der Stab der Rollendrehung beim Ofenbetrieb folgen.

Geeignete Dimensionierung des Stabes (1) bedeutet nun, daß die Länge $b_k$ (2) des Rollenschaftes einerseits sowie der Innendurchmesser $D_i$ (6) der Rolle (4) bzw. der Außendurchmesser $d_a$ (7) des Stabes (1) andererseits so aufeinander abgestimmt werden, daß der Stab (1) mit nur geringen Spiel und geringer Neigung zur Rollenachse in der Rolle (4) sitzt, sodaß er sich gleichmäßig mit der Rolle drehen kann. Als Stabmaterial wird vorzugsweise Stahl eingesetzt.

Geeignete Dimensionierung des Stabes bedeutet aber zusätzlich, dass mit dem Stab ein bestimmtes Biegemoment auf das Rollenende ausgeübt werden soll, das je nach Voraussetzungen für jeden Anwendungsfall speziell ermittelt werden muss. Dieses Biegemoment M wird am günstigsten so gewählt, dass der Spannungsverlauf im Inneren der Rolle innerhalb des Ofens möglichst klein bleibt, an den Ofenwänden also entgegengesetzt gleich gross wird wie im Spannungsmaximum in der Nähe der Rollenmitte. Dieser günstigste Wert $M_g$ des Biegemomentes bestimmt sich folgendermassen

a) bei einseitiger Anordnung zu

$$Gl\langle 1\rangle \qquad M_{1g} = -\frac{G_R\,L_f}{16}\cdot(2 + 3\,r - r\,s + P_{1g})$$

mit

$G_R$ = Rollengewicht
$L_f$ = freie Länge der Rolle = Abstand zwischen den Rollenlagern
$r$ = $G_B / G_R$ ($G_B$ = Gewicht des Besatzes auf der Rolle)
$s$ = $B_B / L_f$ ($B_B$ = Besatzbreite)

$$P_{1g} = (8t+14)u - 16(1+t)u\left\langle\frac{1}{2}+\frac{(1-s)r\cdot t}{(1+t)^2\cdot u}\right\rangle^{0.5} + 5(1-s)r$$

$t$ = $B_O / L_f$ ($B_O$ = lichte Ofenweite)
$u$ = $1 + r\cdot s$

b) bei beidseitiger Anordnung links und rechts zu jeweils

$$Gl\langle 2\rangle \qquad M_{2g} = -\frac{G_R\,L_f}{24}\cdot\left\langle 6r(1-s) + 3u + \frac{3}{2}t(rs\langle 2-t\rangle - 2r - t)\right\rangle$$

Um diese Biegemomente in der Praxis zu erzielen, können grundsätzlich Aussendurchmesser, Innendurchmesser und/oder Länge b (8) des Stabes geeignet dimensioniert werden. Wird dann die Besatzbreite pro Rolle geändert (z. B. wenn bei einem Fliesenofen Fliesen mit einem anderen Flächengewicht gebrannt werden sollen), kann das hierfür erforderliche günstigste Biegemoment durch Verwendung eines anderen Stabes erzielt werden.

Wenn der Besatz häufig gewechselt werden muss, müssten demnach häufig die Stäbe gewechselt werden. Ausserdem müssten verschiedene Sätze von Stäben vorhanden sein, wodurch sich die Kosten erhöhen würden. In weiterer Ausgestaltung des Erfindungsgedankens wird daher vorgeschlagen, auf dem Stab ein verschiebbares, vorzugsweise rotationssymmetrisches Zusatzgewicht (9) vorzusehen (Figur 1), das an der gewünschten Position auf dem Stab fixiert werden kann. Dadurch wird es möglich, mit einem Satz Stäbe den Ofen auch bei wechselndem Besatz zu betreiben, indem das Zusatzgewicht an der jeweils geeigneten Stelle fixiert wird. Diese Fixierung kann z.B. dadurch erfolgen, dass ein mit (9) verbundener Stift (10) über eine Feder (11) in eine Kerbe (12) des Stabes (1) gedrückt wird (s. Fig. 1).

Im Vergleich zum heutigen Stand der Technik, bei dem keine Spannungsreduzierung im Rolleninneren erfolgt, so dass sich der Maximalwert $S_{O,m}$ der Spannung zu

$$\text{Gl<3>} \qquad S_{O,m} = \frac{D_a \cdot G_R \cdot L_f}{96 \cdot I} \; (6 + 6 \cdot r \cdot \langle 2 - s \rangle)$$

mit

$I = \frac{\pi}{64} \cdot (D_a^4 - D_i^4)$ Flächenmoment 2. Grades der Rolle ergibt und in Ofenmitte auftritt, wird durch das Anlegen des jeweils günstigsten Biegemomentes an den Rollenenden dieses Spannungsmaximum so weit wie im Ofeninneren nur möglich herabgesetzt, und zwar

a) bei einseitiger Anordnung auf

$$\text{Gl<4>} \qquad S_{1,m} = \frac{D_a G_R L_f}{96 \cdot I} \left( \frac{3}{2} p_{1g}(1+t) + 6t^2 u - \langle 3(1+r) + \frac{9}{2} r (1-s) \rangle \langle 1-t \rangle \right)$$

das etwas ausserhalb der Ofenmitte vorliegt, und zwar verschoben in Richtung von Rollenende weg, an das das Biegemoment angelegt ist, bzw

b) bei beidseitiger Anordnung auf

$$\text{Gl<5>} \qquad S_{2,m} = \frac{D_a \cdot G_R \cdot L_f}{96 \cdot I} \left( 6 \cdot r \cdot t \cdot (1 - s) + 3\, t^2 \cdot u \right),$$

das in Ofenmitte vorliegt.

Zusammen mit der zugehörigen Eichkurve des Rollenherstellers, die die maximale Spannungsbelastbarkeit des eingesetzten Rollenmaterials als Funktion der Temperatur ausweist, kann daraus insb. die maximale Temperaturbelastbarkeit ermittelt werden.

Zur Illustration der erläuterten Vorschläge soll das folgende Beispiel eines Fliesenofens dienen :

( i) Die Rollendaten seien vorgegeben mit

$$D_a / D_i / L_R = 27 \text{ mm} / 17{,}1 \text{ mm} / 3300 \text{ mm}$$

Dabei ist $L_R$ die Länge der Rolle im Anlieferungszustand. Beim Einbau der Rolle in den Ofen stehen die Rollenenden links bzw. rechts um das (in der Praxis jeweils kurze) Stück $L_{u,l}$ bzw $L_{u,r}$ über die Lagerung nach aussen hinaus, so dass sich die freie Länge ergibt zu

$$L_f = L_R - L_{u,l} - L_{u,r}$$

Im Beispiel etwa seien $L_{u,l} = L_{u,r} = 50$ mmm, sodass sich die freie Rollenlänge L ergibt zu

$$L_f = 3200 \text{ mm}$$

( ii) Die Ofenvorgaben seien

$$B_B / B_O / G_B = 2200 \text{ mm} / 2400 \text{ mm} / 1{,}6 \text{ kp}$$

Dann würden gemäss Gl<3> die üblicherweise für den FLiesenbrand eingesetzten Rollen auf Basis von Aluminiumsilikaten bei freier Anordnung einer inneren Spannung von maximal

$$S_{O,m} = 114 \text{ kp}^2/\text{cm}$$

ausgesetzt sein und daher bei Zugrundelegen einer für solche Aluminiumsilikate typischen Eichkurve Anwendungstemperaturen von maximal

$$\text{ca. } T_{O,m} = 960\ °C$$

vertragen, was für den Fliesenbrand in aller Regel nicht ausreicht. Daher sollen die Rollenspannungen im Ofeninneren gemäss der vorliegenden Erfindung verringert werden durch den Einsatz von Stahlstäben mit (s. Figur 1)

(iii)

| | |
|---|---|
| Aussendurchmesser | $d_a = 17$ mm (Vollstab) |
| Länge | $b = 1000$ mm = 1 m |
| | $b_i = 200$ mm, daher $b_k = 250$ mm, |
| daher | $b_a = 800$ mm, daher $b_1 = 750$ mm |

Der Stab allein würde daher ein Biegemoment von

$M_{St} = -\ 53{,}1$ kp cm ausüben.

Sei das Zusatzgewicht (9) ausserdem Z = 2,5 kp.

1. Die heute existierenden Rollenöfen erlauben auf der Rollenantriebsseite keinen Zugang zum Rollenende, wohl aber auf der gegenüberliegenden Seite, sie können also einseitig nachgerüstst werden. Für das günstigste anzuwendende Biegemoment $M_{1g}$ ergibt sich im Beispeilsfall

$$M_{1g} = -191{,}8 \text{ kp cm} \qquad \text{(s. Gl<1>)}$$

Daher muss Z gemäss allg. Grundlagen zur Berechnung von Biegemomenten in einer Entfernung $e_{1g}$ (15) von

$$e_{1g} = 55{,}5 \text{ cm} \qquad \text{(s. Figur 1)}$$

vom Lager (16) angeordnet werden. Dadurch würde sich die maximale Rollenspannung im Ofen reduzieren auf

$$S_{1,m} = 58{,}2 \text{ kp / cm}^2 \qquad \text{(s. Gl<4>)}$$

sodass sich bei Verwendung derselben Eichkurve wie vorher eine maximale Anwendungstemperatur von

$$\text{ca. } T_{1,m} = 1125\ °C$$

ergeben würde. Dies bedeutet eine Steigerung um ca. 165 °C und reicht in einigen Fällen für einen Fliesenbetrieb bereits aus.

2. Wenn durch Umkonstruktion des Rollenofens sogar eine beidseitige Anordnung von Stäben möglich ist, ergeben sich analog

$M_{2g,l} =$ $M_{2g,r} = -129{,}2$ kp cm
$e_{2g,l} =$ $e_{2g,r} = 30{,}4$ cm
$S_{2,m} =$ 34,4 kp cm (s. Gl<5>)
$T_{2,m} =$ 1215 °C

womit alle üblichen Fliesenbrennvorgänge abgedeckt werden. Zusammenfassung :

| | Anordnung | | |
|---|---|---|---|
| | bisher | einseitig | beidseitig |
| Günst. Biegemom. / kp cm | -- | - 191,8 | - 129,2 |
| Abstand zw. Z u. Lager/cm | -- | 55,5 | 30,4 |
| Max. Spannung / kp/cm² | 114 | 58,2 | 34,4 |
| Max. Anwend.temp. ca./°C | 960 | 1125 | 1215 |

In Fortsetzung des Beispiels werde nun angenommen, dass ein Wechsel des Fliesenbesatzes vorgenommen werden soll, dass etwa Fliesen mit einem höheren Besatzgewicht gebrannt werden sollen, etwa

$$G_B = 2{,}2 \text{ kp / Rolle}$$

sodass $S_{O,m} = 133{,}5$ kp/cm² würde. Weiterhin würden sich dann folgende Resultate ergeben

| | Anordnung | | |
|---|---|---|---|
| | bisher | einseitig | beidseitig |
| Günst. Biegemom. / kp cm | -- | - 222,4 | - 150,4 |
| Abstand zw. Z u. Lager/cm | -- | 67,7 | 38,9 |
| Max. Spannung / kp/cm² | 114 | 67,9 | 40,7 |
| Max. Anwend.temp. ca./°C | 960 | 1090 | 1195 |

Bei einem Rollenofen mit beidseitiger Möglichkeit zur Anwendung von Biegemomenten wäre also bei der Änderung des Fliesenbesatzes von 1,6 kp / Rolle auf 2,2 kp /Rolle lediglich eine beidseitige Verschiebung des Zusatzgewichtes Z um 8,5 cm nach aussen erforderliche nämlich von der Lage bei $e_{2g} = 30{,}4$ cm auf $e_{2g} = 38{,}9$ cm.

Das Beispiel zeigt zugleich, wie einfach die Handhabung in der Praxis ist. Auch die überwachung, ob tatsächlich das günstigste Biegemomet bei allen betroffenen Rollen angelegt ist, gestaltet sich sehr einfach. Dazu braucht bei nur einer einzigen Rolle die Lage des Zusatzgewichtes (9) genau überprüft zu werden, alle anderen Rollen lassen sich dann dadurch kontrollieren, ob ihre Zusatzgewichte fluchten.

Natürlich ist es nicht zwingend, dass in der Praxis genau $M_{1g}$ bzw $M_{2g}$ angewendet werden. Denn selbstverständlich bringen alle Biegemomente M, die zwischen M = O und $M = M_{1g}$ bzw $M = M_{2g}$ liegen, bereits eine Reduzierung der inneren Rollenspannung, wenn auch nicht die günstigste. Auch dem Betrag nach grössere Biegemomente als $|M_{1g}|$ bzw $|M_{2g}|$ bringen solange noch eine Spannungsreduzierung gegenüber freien Rollen, wie ein Grenzwert $|M_{Gr}|$ unterschritten bleibt, der sich aus der Bedingung

$$|S_{Gr}| < S_{O,m}$$

wie folgt ergibt :

a) bei einseitiger Anordnung

$$Gl<7> \qquad M_{1,Gr}=-\frac{G_R\,L_f}{24\,(1+t)}\cdot<12\,(1+r)\,(2-t)\,-6\left(2-2t+t^2\right)u>$$

Bei obigem Beispiel ergibt sich $M_{1,Gr}$ = - 343,8 kpcm.

b) bei beidseitiger Anordnung

$$Gl<8> \qquad M_{2,B,Gr}=\frac{4}{1+t}\,M_{2g}-\frac{1-t}{1+t}\,M_{2,A,Gr}\,,$$

was sich bei symmetrischer Anordnung vereinfacht zu

$$Gl<9> \qquad M_{2,A,Gr}=M_{2,B,Gr}=2\,M_{2g}$$

Für obiges Beispiel folgt: $M_{2,Gr}$ = - 300,8 kp cm.

Es erweist sich als besonderer Vorteil des Erfindungsgedankens, dass zur Vermeidung einer sinnlos hohen Belastung der Rolle die Biegemomente mit besonders einfachen Mitteln begrenzt werden können, indem nämlich die Stablänge hinreichend kurz gehalten wird. Im erwähnten Beispiel etwa reicht die Stablänge von 1000 mm = 1 m zur Erzielung eines Biegemomentes von höchstens - 250 kp cm aus, sodass eine sinnlose überlastung der Rolle völlig ausgeschlossen ist.

Damit die Rollen in ihrer gleichmässigen Drehung durch die Stäbe nicht gestört werden, muss der Spalt zwischen Rolle und Stab hinreichend eng sein. Dazu reicht es vollauständig aus, wenn die Achse des Stabes gegen diejenige der Rolle um weniger als 0,2 Grad geneigt ist. Das bedeutet, dass bei einer Schaftlänge $b_k$ von z. B. 250 mm die Innendurchmesser $D_i$ der Rolle auf den Aussendurchmesser (7) der Stäbe auf ca. 0.8 mm abgestimmt sein müssen. Letztare sind ohne Schwierigkeiten mit einer totalen Toleranz von 0.2 mm herstellbar, so dass die Toleranz für die Rolleninnendurchmesser bei ca. 0.6 mm liegen soll. In aller Regel wird es möglich sein, diese bereits beim normalen Herstellprozess der Rolle einzuhalten, in Ausnahmefällen kann noch ein nachträglicher Schleifprozess angefügt werden.

Aus Kostengründen soll während der gesamten Betriebsdauer des Ofens nur ein Satz Stäbe erforderlich sein. Da Stahl jedoch weniger hart ist als alle verwendeten Rollenkeramiken, wird sich im Lauf der Jahre ein gewisser Abrieb am Stahlschaft auch bei geringem Spalt zur Rolle ergeben. Es kann daher sinnvoll sein, auf den Stahlschaft eine Schicht aus einer Keramik mit vergleichbarer oder grössererer Härte aufzubringen.

Da der Betrag des Zusatzgewichtes (9) beim Ofenbetrieb bekannt ist, kann auf dem Stab (1) zugleich eine Eichskala für die Biegemomente vorgesehen werden, in welcher Lage des Zusatzgewichtes (9) sich also welches Biegemoment ergibt. Dadurch wird eine besonders rasche Handhabung bei der Einstellung des gewünschten Biegemomentes in der Praxis möglich.

Da Rollenöfen in aller Regel sehr lang sind -- Ofenlängen von mehr als 100 m sind keine Ausnahme -- werden sehr viele Rollen pro Ofen benötigt. Um die erforderliche Konstanz bei der Durchlaufgeschwindigkeit der Brenngutes durch den Ofen zu erzielen, müssen die Rollen

a. alle denselben Aussendurchmesser und ausserdem
b. untereinandedr dieselbe Winkelgeschwindigkeit aufweisen.

Zur Lösung von b. werden die Rollenaufnahmen auf der Antriebsseite synchron angetrieben. Dazu werden nach dem heutigen Stand der Technik der Antrieb bzw die für die Antriebsübertragung erforderlichen Komponenten in der rückwärtigen Verlängerung der Rollen angeordnet. Daher sind die Rollenenden bisher nicht für zusätzliche Anordnungen zugänglich. Das aber bedeutet, dass bestehende Rollenöfen mit der erfindungsgemässen Anordnung nur einseitig nachgerüstet werden können, nämlich nur auf der der Antriebsseite gegenüberliegenden Ofenseits. In weiterer Ausgestaltung des Erfindungsgedankens wird daher vorgeschlagen, dass auf der Antriebsseite des Rollenofens der Antrieb und die Antriebsübertragung oberhalb oder unterhalb derjenigen Ebene angeordnet werden, die durch die Aneinandereihung der Rollen definiert ist.

Eine Lösungsmöglichkeit besteht etwa darin, dass die Rollenaufnahmen jeweils einen Zahnkranz tragen und dass die Vielzahl der Zahnzränze von einer gemeinsamen Kette angetrieben wird. Dabei wird die Kette als ganzes entweder oberhalb oder unterhalb der Rollenebene angeordnet.

Eine weitere Möglichkeit besteht darin, dass nur eine einzelne Rollenaufnahme von oberhalb oder unterhalb der Rollenebene angetrieben wird. Dazu kann die Antriebswelle z.B. parallel zur Rollenachse liegen und die Rollenaufnahme über Zahnkränze antreiben. Liegt die Antriebswelle nicht parallel (z.B. senkrecht) zur Rollenachse, so kann der Antrieb der Rollenaufnahme z.B. durch Kegelräder/Tellerräder erfolgen. Die Synchronisation der Drehbewegungen der einzelnen Rollenaufnahmen untereinander erfolgt dann über je ein Zwischenrad zwischen zwei benachbarten Rollenaufnahmen mit entsprechenden Zahnkränzen.

Eine dritte Möglichkeit sieht vor, dass eine angetriebene Welle parallel zur Ofenachse (also senkrecht zu den

Rollenachsen) entweder oberhalt oder unterhalb der Rollenenden angeordnet wird. Die übertragung der Wellenrotation auf die Rollenaufnahmen kann dabei über Schraubenräder mit Schrägverzahnung erfolgen.

In weiterer Ausgestaltung des Erfindungsgedankens wird schliesslich vorgeschlagen, die Rollenaufnahmen nicht mehr -- wie beim heutigen Stand der Technic -- auf der Stirnseite zu schliessen, sondern in ihr eine zentrische, kreisförmige öffnung vorzusehen, deren Durchmesser mindestens so gross ist wie der Innendurchmesser der Rolle, so dass in das von der Rollenaufnahme umschlossene Rollendende ohne Schwierigkeiten ein Stab eingeführt werden kann.

Mit Hilfe der vorgenannten Vorschläge lassen sich die erfindungsgemäss beschriebenen Anordnungen von Rollen auf beiden Ofenseiten verwirklichen, so dass die Vorteile des Erfindungsgedankens in vollem Ausmass zugänglich werden.

Es kann zugleich davon ausgegangen werden, dass bei neu konzipierten öfen nicht grundsätzlich nennenswert höhere Kosten für die erfindungsgemäss vorgeschlagene Gesamtanordnung von Rollenantrieb incl. Antriebsübertragung sowie von Rollenaufnahme und Rollenlager entstehen werden. Das aber bedeutet, dass bei neu gebauten öfen die Vorteile der Erfindung mit nur relativ geringem Mehraufwand geganüber den öfen nach dem heutigen Stand der Technik erzielbar sind. Bereitz bestehende öfen auch auf der Antriebsseite umzurüsten, dürfte allerdings relativ aufwendig sein.

**Patentansprüche**

1. Rollenofen -- z.B. zum Härten von Gegenständen aus Metall oder Brennen von Porzellan, Keramik, Fliesen, Ziegeln o.ä. bei Temperaturen von größenordnungsnäßig 1.000 Grad Celsius oder mehr -- mit Rollen, Rollenaufnahmen. Rollenlagern, Antrieb und Antriebsübertragung, wobei auf der Antriebsseite des Rollenofens alle für die Antriebsübertragung erforderlichen Komponenten oberhalb oder unterhalb der durch die Folge von Rollen (4) festgelegten Ebene liegen und wobei jeweils an einem oder an beiden Rollenenden ein einstellbares Biegemoment zur Reduzierung der im Ofeninneren in der Rolle (4) auftretenden Spannungen ausübbar ist, indem ein Gewicht jeweils an den Rollenenden befestigbar ist, wobei dessen Gewichtsverteilung auf den Bereich außerhalb und gegebenenfalls innerhalb des Rollenlagers (16) so gestaltet wird, daß das resultierende Biegemoment außerhalb des Rollenlagers (16) angreift.

2. Rollenofen nach Anspruch 1, dadurch gekennzeichnet, daß das Gewicht aus einem Stab (1) besteht, der in die Hohlrollen formschlüssig hineingesteckt ist.

3. Rollenofen nach Anspruch 2, dadurch gekennzeichnet, dass auf den Stäben (1) verschiebbare Zusatzgewichte (9) vorgesehen sind.

4. Rollenofen nach Anspruch 2 bzw 3, dadurch gekennzeichnet, dass die anlegbaren Biegemomente wenigstens die Werte

   -- bei einseitiger Anordnung

$$M_{1g} = \frac{G_R\,L_f}{16} \cdot (2 + 3 \cdot r - r \cdot s + P_{1g})$$

   -- bei beidseitiger Anordnung

$$M_{2g} = -\frac{G_R\,L_f}{24} \cdot \left\langle 6r(1-s) + 3u + \frac{3}{2} t (rs\langle 2-t\rangle - 2r - t)\right\rangle$$

   mit $G_R$ = Rollengewicht, $L_f$ = freie Länge der Rolle, $r = G_B/G_R$ ($G_B$= Besatzgewicht auf der Rolle), $s = B_B/L_f$ ($B_B$ = Besatzbreite), $P_{1g}$ =

$$(8t+14)u - 16(1+t)u\left[\frac{1}{2} + \frac{(1-s)r}{(1+t)^2}\frac{t}{u}\right]^{0.5} + 5(1-s)r$$

   $t = B_O/L_f$ ($B_O$ = lichte Ofenweite), $u = 1+ rs$ erreichen, indem Stablänge (8) bzw Zusatzgewicht (9) hinreichend gross sind.

5. Rollenofen nach Anspruch 2 bzw 3, dadurch gekennzeichnet, dass die anlegbaren Biegemomente die Granzwerte

--

$$M_{1,Gr} = -\frac{G_R L_f}{24(1+t)} \cdot \left\langle 12(1+r)(2-t) - .6(2-2t+t^2)u \right\rangle$$

bei einseitiger Anordnung bzw

--

$$M_{2,B,Gr} = \frac{4}{1+t} M_{2g} - \frac{1-t}{1+r} M_{2,A,Gr}$$

bei beidseitiger Anordnung

mit $G_R$ = Rollengewicht, $L_f$ = freie Länge der Rolle, r = $G_B/G_R$ ($G_B$= Besatzgewicht auf der Rolle), s = $B_B/L_f$ ($B_B$ = Besatzbreite), $P_{1g}$ =

$$(8t+14)u - 16(1+t)u\left[\frac{1}{2}+\frac{(1-s)r}{(1+t)^2}\frac{t}{u}\right]^{0.5} + 5(1-s)r$$

t = $B_O/L_f$ ($B_O$ = lichte Ofenweite), u = 1+ rs nicht überschreiten, indem die Stäbe (1) entsprechend kurz gehalten sind.

6. Rollenofen nach Anspruch 2, dadurch gekennzeichnet, dass die Rolleninnenseite einem Schliff erhält, der mimdestens so lang ist wie der Schaft (7) des Stabes (1) und der die Toleranz des Rolleninnendurchmessers (6) begrenzt auf etliche Zehntel mm.

7. Rollenofen nach Anspruch 2, dadurch gekennzeichnet, dass die in den Hohlrollen (4) steckenden Schäfte (2) der Stäbe (1) an der Oberfläche eine zusätzliche Schicht aus Keramik tragen, die ähnliche oder grössere Härte aufweist als die Rolle (4) selbst.

8. Rollenofen nach einem der Ansprüche 2 bzw 3, dadurch gekennzeichnet, dass die Stäbe (1) eine Eichtung für die erzielten Biegemomente bzgl. der Lage des Zusatzgewichts (9) aufweisen,

9. Rollenofen nach Anspruch 1, dadurch gekennzeichnet, dass bei der Vorrichtung zur Aufnahme einer mit der ersteren starr verbindbaren Rolle, also der Rollenaufnahme, auf der Stirnseite eine zentrische, kreisförmige öffnung vorgesehen wird, deren Durchmesser mindestens so gross ist wie der Innendurchmesser (6) der Rolle (4).

**Claims**

1. Roller kiln --- for example for the hardening of samples made of metal or for the firing of porcelain, ceramics, pottery, tiles, bricks or similar at temtemperatures of the order of magnitude of 1.000 degrees Celsius or more --- with rollers, roller holders, roller bearings, a drive system and a drive transfer system whereby on the drive's side of the roller kiln all of the components needed for the drive transfer system are located above or below the plane determined by the sequence of rollers (4) and whereby at each respective end at one or both sides of the rollers an adjustable bending moment can be applied for the reduction of the internal stresses in the rollers within the kiln by means of a weight which can be fixed at the respective rollers' ends whereby its weight distribution in the area outside and possibly inside the roller bearing (16) is performed such as to make the resulting bending moment attack outside the roller bearing (16).

2. Roller kiln according to claim 1 wherein the weight consists of a rod (1) which with positive engagement is sticked into the hollow rollers.

3. Roller kiln according to claim 2 wherein additional sliding weights are attached.

4. Roller kiln as in claims 2 or 3 wherein the applicable bending moments at least reach the values

-- when applied single-sided

$$M_{1g} = -\frac{G_R * L_f}{16} * (2 + 3*r - r*s + p_{1g})$$

-- when applied on both sides

$$M_{2g} = - \frac{G_R * L_f}{24} * \left\langle 6r*(1-s) + 3u + \frac{3}{2} t*(r*s*(2-t)-2r-t) \right\rangle$$

$G_R$ = roller weight, $L_f$ = free length of the roller
$r = G_B/G_R$ ($G_B$ = load weight per roller)
$s = B_B/L_f$ ($B_B$ = load working width)

$$p_{1g} = (8t+14)*u - 16(1+t)*u*\left(\frac{1}{2} + \frac{(1-s)*r*t}{(1+t)(1+t)*u}\right)^{0.5} +5(1-s)*r$$

$t = B_O/L_f$ ($B_O$ = firing channel width), $u = 1 + r*s$ by making the length (8) of the rod and/or the additional slitting weight (9) sufficiently large.

**5.** Roller kiln as in claims 2 or 3 wherein the applicable bending moments do not exceed the upper limits

--

$$M_{1,Gr} = - \frac{G_R * L_f}{24*(1+t)} * \left\langle 12*(1+r)*(2-t)-6(2-2t+t^2)*u \right\rangle$$

when applied single-sided and

-- $$M_{2,B,Gr} = \frac{4}{1+t} * M_{2g} - \frac{1-t}{1+t} * M_{2,A,Gr}$$

when applied on both sides
by making the rods (1) correspondingly short.

**6.** Rollen kiln as in claim 2 wherein the inner side of the hollow roller has a grinding which is at least as long as the shaft (2) of the rod (1) and which limits the tolerance of the roller's inner diameter (6) to several tenths of a millimetre.

**7.** Roller kiln as in claim 2 wherein the shafts (2) of the rods (1) sticking in the hollow rolls (4) bear at their surface an additional layer of ceramics with a hardness similar to or bigger than the hardness of the roller (4) itself.

**8.** Roller kiln as in claims 2 or 3 wherein the rods (1) show a calibration for the bending moments achieved with respect to the position of the additional weight (9).

**9.** Roller kiln as in claim 1 wherein in the device for holding a roller which can be connected rigidly with this device, i.e. in the roller holder, at the front side a centered circular aperture is provided the diameter of which is at least as large as the inner diameter (6) of the roller (4).

**Revendications**

**1.** Four à rouleaux --- par exemple pour durcir des objets en métal ou pour la cuisson de porcelaine, de ceramique, de carreaux, de briques ou d'objets similaires à des temperatures de l'ordre de 1.000 degrés Celsius ou plus --- avec des rouleaux, des logements à rouleaux, des paliers à rouleaux, de 1' entraînement et de la transmission du mouvement dans lequel sur le côté de l'entraînement du four à rouleaux touts les composants nécessaires pour la transmission du mouvement se trouvent au-dessus ou au-dessous du niveau déterminé par la suite des rouleaux et dans lequel au chaque bout correspondant de l' un ou des deux côtés des rouleaux un moulent de flexion ajustable pour la réduction des tensions apparaissantes à l'intérieur du four dans le rouleau peut être exercé en pouvant attacher un poids au bout de chacun des rouleaux tout en faisant la distribution du poids à l'extérieur et possiblement à l'intérieur du palier du rouleau telle que le moment de flexion en résultant attaque à l'extérieur du palier du rouleau.

**2.** Four à rouleaux selon la, revendication 1, caractérisé en ce que le poids est constitué par un bâton (1) qui est introduit dans les rouleaux creux à engagement positif.

**3.** Four à rouleaux selon la revendication 2, caractérisé en ce que des poids déplacables supplémentaires sont prévus sur les bâtons (1).

**4.** Four à rouleaux selon les revendications 2 ou 3, caractérisé en ce que les moments de flexion appliqués atteignent les valeurs d'au moins

-- pour la disposition sur un côté

$$M_{1g} = -\frac{G_R*L_f}{16}*(2+3*r-r*s+p_{1g})$$

-- pour la disposition sur les deux côtés

$$M_{2g} = -\frac{G_R*L_f}{24}*\left\langle 6r*(1-s)+3u+\frac{3}{2}t*(r*s*(2-t)-2r-t)\right\rangle$$

$G_R$ = poids du rouleau, $L_f$ = longueur libre du rouleau
$r = G_B/G_R$ ($G_B$ = poids de charge par rouleau)
$s = B_B/L_f$ ($B_B$ = largeur de charge utile)

$$p_{1g} = (8t+14)*u-16(1+t)*u*\left[\frac{1}{2}+\frac{(1-s)*r*t}{(1+t)(1+t)*u}\right]^{0.5}+5(1-s)*r$$

$t = B_O/L_f$ ($B_O$ = largeur interne du four), $u = 1+r*s$ enfaisant la longueur du bâton (8) respectivement le poids supplémentaire suffisamment grande.

**5.** Four à rouleaux selon les revendications 2 ou 3, caractérisé en ce que les moments de flexions qui peuvent être appliqués ne dépassent pas les valeurs limites

--

$$M_{1,Gr} = -\frac{G_R*L_f}{24*(1+t)}*\left\langle 12*(1+r)*(2-t)-6(2-2t+t^2)*u\right\rangle$$

pour la disposition sur un côté

-- $$M_{2,B,Gr} = -\frac{4}{1+t}*M_{2g}-\frac{1-t}{1+t}*M_{2,A,Gr}$$

pour la disposition sur les deux côtés

en faisant les bâtons (1) correspondamment courts

**6.** Four à rouleaux selon la revendication 2, caractérisé en ce que le côté interne du rouleau reçoit un polissage qui est au moins aussi long que la hampe (7) du bâton (1) et qui limite la tolérance du diamètre interne du rouleau à quelques dixièmes d'un millimetre.

**7.** Four à rouleaux selon la revendication 2, caractérisé en ce que les hampes (2) des bâtons (1) introduites dans les rouleaux creux (4) portent à leur surface une couche supplémentaire en céramique qui a une dureté semblable ou plus grande que le rouleau lui-même.

**8.** Four à rouleaux selon une des revendications 2 ou 3, caractérisé en ce que les bâtons (1) ont un calibrage pour les moments de flexions atteints relatif à la position du poids supplémentaire.

**9.** Four à rouleaux selon la revendication 1, caractérisé en ce qu'au dispositif pour le logement d'un rouleau qui peut être lié rigidement à ce dispositif, c'est-à-dire au logement du rouleau, une aperture centrique et circulaire est prévu sur le front dont le diamètre est au moins aussi grand que le diamètre interne (6) du rouleau (4).

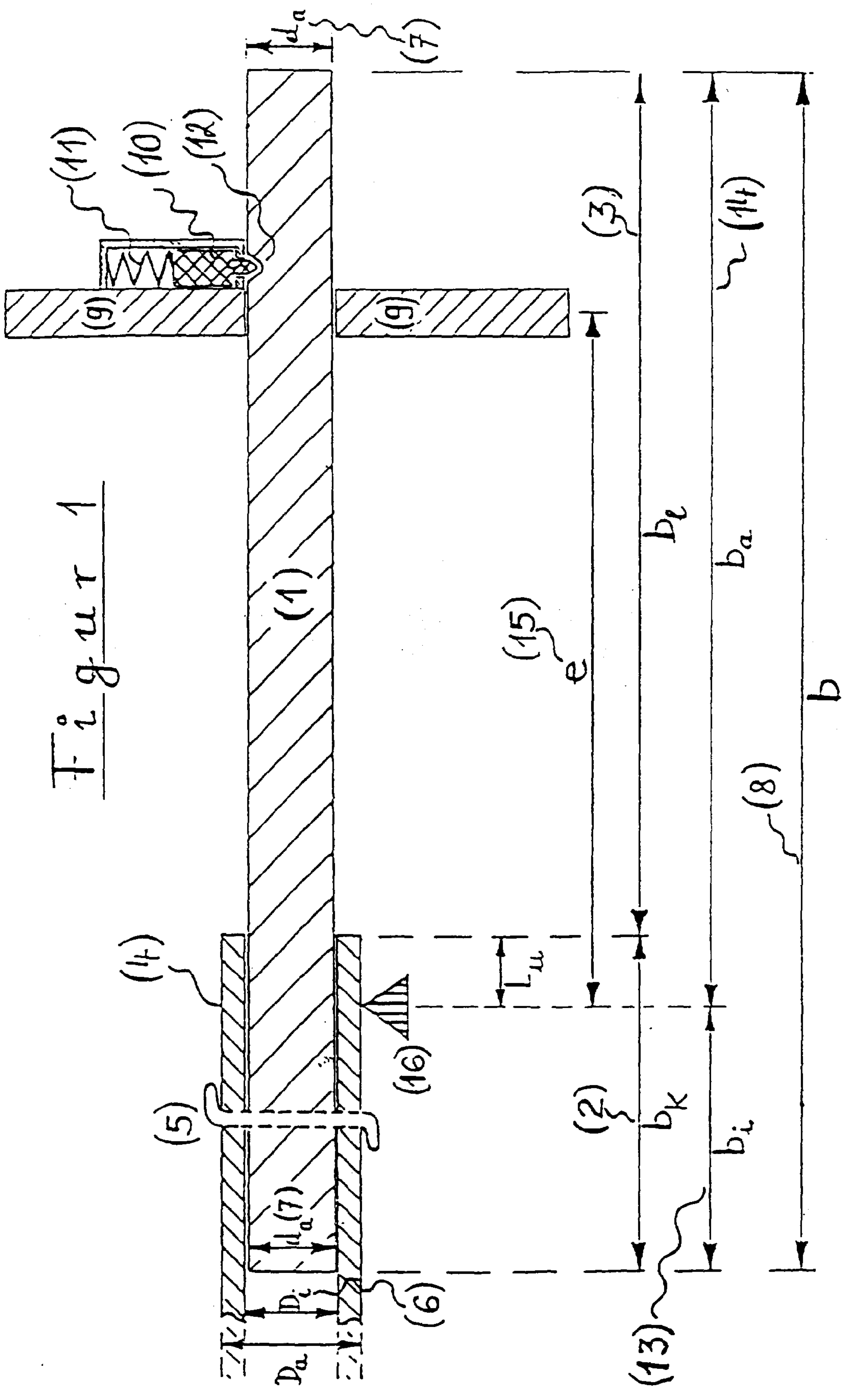


Figur 1